# DEMANDE DE BREVET EUROPEEN

(11) **EP 0 928 736 A1**
(43) Date de publication de la demande: **14.07.1999**
(21) Numéro de dépôt: 98403178.1
(22) Date de dépôt: 16.12.1998
(51) Int. Cl.: B62L 1/06, B62L 1/14

(54) **Dispositif d'adaptateur pour freins de cycles**

(30) Priorité: 08.01.1998 FR 9800142
(71) Demandeur: Etablissements Philippe, 41000 Blois (FR)
(72) Inventeur: Desnavailles, Philippe, 41190 Chambon sur Cisse (FR)
(74) Mandataire: Debay, Yves

(57) **Abrégé**

Dispositif d'adaptateur pour freins de cycles caractérisé en ce qu'il comprend au moins une paire d'adaptateurs (10) de forme déterminée, chaque paire d'adaptateurs (10) étant destinée à être montée sur au moins un dispositif de fixation (1) du système de freinage (50) existant d'un cycle, chaque adaptateur (10) comportant des moyens (14) de montage sur un dispositif de fixation (1) du système de freinage (50) existant, et des moyens (11) de montage d'un étrier de frein (40), ces moyens (11,14) étant situés à une distance déterminée les uns des autres.

## Description

La présente invention concerne un dispositif d'adaptateur pour freins de cycles permettant d'utiliser des roues de diamètre différent avec un même cycle sans changer le système de freinage, par exemple, pour monter des roues de route sur un vélo tout terrain.

Il est connu par la demande de brevet français 2 666 783 un système permettant de modifier la longueur de la fourche avant. Ce système comporte une paire de manchons. Chaque manchon est emboîté dans deux tubes formant une branche de la fourche. Grâce à des perçages pratiqués dans chaque manchon et tube correspondant, il est possible de modifier la longueur de la fourche avant et donc de disposer une roue de diamètre différent. Ce système présente les inconvénients suivants. Tout d'abord ce dispositif n'est pas applicable pour la roue arrière d'un cycle. De plus, il fragilise la fourche avant.

Il est connu également par la demande de brevet EP 0 561 094 A un système de freinage permettant le montage de roues de différents diamètres sur un cycle. Le système de freinage comprend deux bras indépendants sur lesquels il existe deux ou une pluralité de positions pour les étriers de frein. Ceci permet donc d'adapter la position des étriers de frein au diamètre de la roue. Ce système présente les inconvénients suivants. Tout d'abord, il s'agit d'un système complet de freinage et non d'une adaptation des systèmes existants, ce qui rend le système onéreux et complexe au montage. De plus, la disposition des différentes positions des étriers de freins modifie considérablement la qualité du freinage suivant le diamètre des roues utilisées.

La présente invention a donc pour objet de pallier les inconvénients de l'art antérieur en proposant un dispositif s'adaptant aux systèmes de freins existants permettant de monter sur un cycle des jeux de roues de diamètre différent, sans modifier les qualités du freinage.

Ce but est atteint par le fait que le dispositif d'adaptateur pour freins de cycles comprend au moins une paire d'adaptateurs de forme déterminée, chaque paire d'adaptateurs étant destinée à être montée sur au moins un dispositif de fixation du système de freinage existant d'un cycle, chaque adaptateur comportant des moyens de montage sur un dispositif de fixation du système de freinage existant, et des moyens de montage d'un étrier de frein, ces moyens étant situés à une distance déterminée les uns des autres.

Selon une autre particularité, les moyens de montage d'un étrier de frein de chaque adaptateur comprennent au moins un premier perçage circulaire taraudé de diamètre déterminé, destiné à recevoir une vis de fixation de l'étrier de frein existant.

Selon une autre particularité, les moyens de montage de chaque adaptateur sur le dispositif de fixation du système de freinage existant comprennent un deuxième perçage circulaire, ce perçage étant destiné à collaborer avec les moyens de fixation de l'étrier de frein du système de freinage existant.

Selon une autre particularité, les centres des perçages circulaires formant d'une part les moyens de montage de chaque adaptateur sur le dispositif de fixation du système de freinage existant, et d'autre part les moyens de montage d'un étrier de frein, sont situés sur un axe sensiblement parallèle à l'axe longitudinal de l'adaptateur.

Selon une autre particularité, la distance séparant d'une part les moyens de montage de chaque adaptateur sur le dispositif de fixation du système de freinage existant, et d'autre part les moyens de montage d'un étrier de frein, est déterminée en fonction des différents diamètres de roues utilisées, et choisie entre 25 et 40mm.

Selon une autre particularité, la forme de chaque adaptateur est déterminée pour que celui-ci soit le plus léger possible.

Selon une autre particularité, la forme de chaque adaptateur est sensiblement rectangulaire dont la longueur est choisie entre 38 et 43 mm et la largeur choisie entre 15 et 25 mm comportant ou non un allégement de matière.

Selon une autre particularité, chaque adaptateur comporte des moyens le bloquant en rotation par rapport à la fourche du cycle et/ou des moyens permettant de régler la force du ressort de freinage

Selon une autre particularité, les moyens de réglage de la force du ressort de freinage comprennent une série d'au moins deux perçages de dimension déterminée, située à proximité des moyens de montage d'un étrier de frein et destinée à recevoir un ressort de réglage de la force du freinage.

Selon une autre particularité, les moyens bloquant chaque adaptateur en rotation par rapport à la fourche du cycle comprennent un perçage taraudé destiné à recevoir un moyen de fixation de type vis, venant en appui sur les haubans du cadre ou les fourreaux de la fourche du cycle.

Selon une autre particularité, les moyens bloquant chaque adaptateur en rotation par rapport à la fourche du cycle comprennent une soudure solidarisant l'adaptateur avec la fourche du cycle.

Selon une autre caractéristique, le matériau utilisé pour fabriquer l'adaptateur est de l'aluminium ou de l'acier ou du titane ou du carbone ou de l'acier inoxydable ou tout autre matériau.

D'autres particularités et avantages de la présente invention apparaîtront plus clairement à la lecture de la description ci-après faite en référence aux dessins annexés dans lesquels :
- la figure 1 représente une vue de face d'un adaptateur,
- la figure 2 représente un exemple d'utilisation du dispositif d'adaptateur pour frein de cycle selon l'invention.

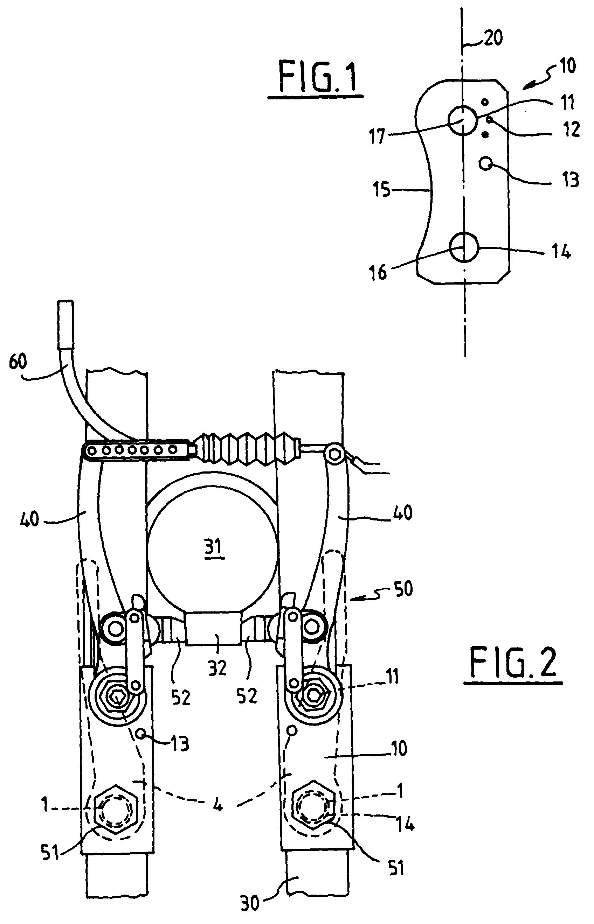

La figure 1 représente une vue de face d'un adaptateur. Cet adaptateur (10) a une forme déterminée pour qu'il soit le plus léger possible. Par exemple, cet adaptateur (10) peut être sensiblement de forme rectangulaire, dans laquelle est pratiquée une échancrure (15) pour constituer un allégement de matière. L'adaptateur (10) comporte les moyens (11) de montage d'un étrier de frein et les moyens (14) de montage de l'adaptateur (10) sur un dispositif de fixation (1) du système de freinage (50) existant. Les moyens (11) de montage d'un étrier de frein sont constitués d'un premier perçage (11) taraudé. Ce premier perçage (11) est destiné à collaborer avec une fixation de type connu (non représentée), de type vis écrous permettant de monter un étrier de frein (40, fig2). Les moyens (14) de montage de l'adaptateur (10) sur le dispositif de fixation (1) du système de freinage (50) existant sont constitués par au moins un deuxième perçage (14). Ce deuxième perçage (14) est destiné à collaborer avec une fixation (non représentée) connue de type vis et écrou de blocage permettant de monter l'adaptateur (10) sur chaque dispositif de fixation (1) du système de freinage (50) existant. De façon préférentielle, les centres (17,16) des deux perçages (11,14) sont situés sur un axe (20) sensiblement parallèle à l'axe longitudinal de l'adaptateur (10). La distance entre les deux perçages (11,14) est déterminée en fonction des différents diamètres de roue que l'utilisateur souhaite utiliser avec le cycle. Cette distance est préférentiellement choisie entre 25 et 40 mm. Il est également possible de pratiquer plusieurs perçages identiques au deuxième perçage (14) distant du premier perçage (11) tel que l'utilisateur peut adapter un type de roues par perçage identique au deuxième perçage (14). Les dimensions de l'adaptateur (10) sont également déterminées en fonction des différents diamètres de roueS que l'utilisateur souhaite utiliser avec le cycle. Par exemple, pour un adaptateur (10) de forme sensiblement rectangulaire, la longueur de ce rectangle est choisie entre 38 et 48 mm et la largeur entre 15 et 25 mm. Cet adaptateur (10) particulier permet l'utilisation de roues avec pneu, dont le rayon est compris entre 330 et 347 mm. La position des perçages (11,14) l'un par rapport à l'autre dépend du cycle sur lequel est monté l'adaptateur (10). Par exemple, si le cycle est un vélo tout terrain (V.T.T.), celui-ci est alors équipé initialement de roues d'un rayon de 330mm avec pneu. L'adaptateur (10) selon l'invention permet de monter une roue, dite de route, d'un rayon compris entre 332 et 343 mm avec pneu. Dans ce cas de figure, lorsque l'adaptateur (10) est monté sur le dispositif de fixation (1) du système de freinage (50) existant le deuxième perçage (14) se situe au-dessous du premier perçage (11).

Le montage de l'adaptateur (10) selon l'invention, s'effectue de la façon suivante. Lorsque l'utilisateur désire utiliser une roue de diamètre différent, il suffit de démonter les étriers (4) de chaque dispositif de fixation (1) du système de freinage (50) existant avant et arrière. Puis il suffit de monter un adaptateur (10) selon l'invention, par étrier (4) de freins démonté, sur chaque dispositif de fixation (1) du système de freinage (50) existant, de telle sorte que le deuxième perçage (14) soit disposé à la place des fixations des étriers de freins initialement démontés, et que l'axe (20) longitudinal de l'adaptateur (10) soit vertical. Ensuite, il suffit de monter les étriers (4) de freins initialement démontés sur chaque premier perçage (11) de chaque adaptateur (10) situé au-dessus du deuxième perçage (14). Le montage du dispositif d'adaptateur pour freins de cycle sera expliqué en détail par la suite.

L'adaptateur (10) peut comporter, par exemple, des moyens (13) le bloquant en rotation par rapport à la fourche (30) du cycle et/ou des moyens (12) de réglage de la force de freinage. Les moyens (13) de blocage en rotation de l'adaptateur (10) sont constitués, par exemple d'un troisième perçage (13) taraudé destiné à collaborer avec une fixation (non représentée) connue de type vis. Cette vis (non représentée) vient en appui contre les haubans du cadre ou les fourreaux de la fourche (30), bloquant ainsi l'adaptateur (10) en rotation. Les moyens (13) de blocage en rotation de l'adaptateur (10) peuvent également être constitués par une soudure (non représentée) qui solidarise définitivement l'adaptateur aux haubans du cadre ou fourreaux de fourche (30). Les moyens (12) de réglage de la force du ressort de freinage sont constitués d'une série (12) d'au moins deux petits perçages, par exemple 3, située à proximité de la périphérie du premier perçage (11). Lorsqu'un adaptateur (10) est en place sur un dispositif de fixation (1) du système de freinage (50) existant, cette série (12) de petits perçageS est dirigée vers la roue. Ces petits perçages sont destinés à recevoir un ressort (non représenté) qui sollicite les étriers en direction de la jante et permet de régler la force de freinage, jusqu'au moment où les moyens de blocage venant en butée contre le levier prennent le relais.

La figure 2 représente un exemple d'utilisation du dispositif d'adaptateur pour freinS de cycle selon l'invention. Dans cet exemple, l'adaptateur (10) est utilisé pour permettre de monter une roue (31) de plus grand diamètre, par exemple une roue dite de route sur un vélo tout terrain. L'adaptateur (10) est monté sur chaque dispositif de fixation (1) du système de freinage (50) avant et arrière existant, lui-même situé sur la fourche (30) avant ou arrière du cycle. Pour monter l'adaptateur (10) selon l'invention, il suffit dans un premier temps de démonter les étriers de frein (40) existant. Les pointillés de la figure 2 représentent la position des étriers de frein (4) avant leur démontage. Ensuite, l'adaptateur (10) est monté sur le dispositif de fixation (1) du système de freinage (50) existant en solidarisant l'adaptateur (10) par le deuxième perçage (14) avec les éléments (51) de fixation des étriers (40) de freinS. Ces éléments (51) de type connu sont par exemple un système vis et écrou. Puis, l'adaptateur (10) est par exemple bloqué en rotation sur les haubans du cadre ou les fourreaux de la fourche (30) par l'intermédiaire du troisième perçage (13) et d'une vis (non représenté) ou d'une soudure (non représentée), cette vis venant en butée sur le hauban ou fourreaux de fourche (30). Enfin, les étriers de freins initialement démontés de la première position (4) sont remontés dans la seconde position (40) sur chaque adaptateur (10) par l'intermédiaire des premiers perçages (11) de chaque adaptateur (10) et d'éléments de fixation (non représentés) de type connu, tel que par exemple, un système vis écrou. Ainsi, lors du montage d'une roue (31) de plus grand diamètre, les étriers de freins (40) se situent en vis-à-vis de la jante (32) de la roue (31).

Avantageusement l'adaptateur (10), selon l'invention peut être fabriqué dans tout type de matériau et notamment, aluminium, acier, titane, carbone, et acier inoxydable.

Il apparaît clairement que le dispositif d'adaptation pour freins de cycle, selon l'invention, permet de monter des roues de diamètre différent sur un même cycle, sans changer le système de freinage existant dans son entier, ce qui réduit sensiblement les coûts. Ainsi, il est possible de monter, par exemple, des roues dites de route sur un vélo tout terrain. De plus, l'adaptateur (10) utilisé dans le dispositif selon l'invention permet de conserver une qualité de freinage optimale. En effet, le couple de freinage n'est pas modifié puisque la configuration des étriers de freins (40) et la position relative des patins (52) et de la jante (32) ne sont pas modifiées. Il suffit uniquement d'ajuster la tension du câble (60) de freinage.

Il est clair que d'autres modifications à la portée de l'homme du métier entrent dans le cadre de l'invention

## Revendications

1. Dispositif d'adaptateur pour freins de cycle caractérisé en ce qu'il comprend au moins une paire d'adaptateurs (10) de forme déterminée, chaque paire d'adaptateurs (10) étant destinée à être montée sur au moins un dispositif de fixation (1) du système de freinage (50) existant d'un cycle, chaque adaptateur (10) comportant des moyens (14) de montage sur un dispositif de fixation (1) du système de freinage (50) existant, et des moyens (11) de montage d'un étrier de frein (40), ces moyens (11,14) étant situés à une distance déterminée les uns des autres.

2. Dispositif d'adaptateur pour freins de cycles selon la revendication 1, caractérisé en ce que les moyens (11) de montage d'un étrier de frein de chaque adaptateur (10) comprennent au moins un premier perçage (11) circulaire taraudé de diamètre déterminé, destiné à recevoir une vis de fixation de l'étrier de frein (40) existant.

3. Dispositif d'adaptateur pour freins de cycles selon la revendication 1 ou 2, caractérisé en ce que les moyens (14) de montage de chaque adaptateur (10) sur le dispositif de fixation (1) du système de freinage (50) existant comprennent un deuxième perçage (14) circulaire, ce perçage étant destiné à collaborer avec les moyens (51) de fixation de l'étrier de frein (40) du système de freinage (50) existant.

4. Dispositif d'adaptateur pour freins de cycles selon les revendications 2 et 3, caractérisé en ce que les centres (17,16) des perçages (11,14) circulaires formant d'une part les moyens (14) de montage de chaque adaptateur (10) sur le dispositif de fixation (1) du système de freinage (50) existant, et d'autre part les moyens (11) de montage d'un étrier de frein (40), sont situés sur un axe (20) sensiblement parallèle à l'axe longitudinal de l'adaptateur.

5. Dispositif d'adaptateur pour freins de cycles selon l'une des revendications 1 à 4, caractérisé en ce que la distance séparant d'une part les moyens (14) de montage de chaque adaptateur (10) sur le dispositif de fixation (1) du système de freinage (50) existant, et d'autre part les moyens (11) de montage d'un étrier (40), est déterminée en fonction des différents diamètres de roues utilisées, et choisie entre 25 et 40mm.

6. Dispositif d'adaptateur pour freins de cycles selon l'une des revendications 1 à 5, caractérisé en ce que la forme de chaque adaptateur (10) est déterminée pour que celui-ci soit le plus léger possible.

7. Dispositif d'adaptateur pour freins de cycles selon l'une des revendications 1 à 6, caractérisé en ce que la forme de chaque adaptateur (10) est sensiblement rectangulaire dont la longueur est choisie entre 38 et 43 mm et la largeur choisie entre 15 et 25 mm comportant ou non un allégement (15) de matière.

8. Dispositif d'adaptateur pour freins de cycles selon l'une des revendications 1 à 7, caractérisé en ce que chaque adaptateur (10) comporte des moyens (13) le bloquant en rotation par rapport à la fourche (30) du cycle et/ou des moyens (12) permettant de régler la force du ressort de freinage.

9. Dispositif d'adaptateur pour freins de cycles selon la revendication 8, caractérisé en ce que les moyens (12) de réglage de la force du ressort freinage comprennent une série (12) d'au moins deux perçages de dimension déterminée, située à proximité des moyens (11) de montage d'un étrier de frein (40) et destinée à recevoir un ressort de réglage de la force du freinage.

10. Dispositif d'adaptateur pour freins de cycles selon la revendication 8, caractérisé en ce que les moyens (13) bloquant chaque adaptateur (10) en rotation par rapport à la fourche (30) du cycle comprennent un perçage (13) taraudé destiné à recevoir un moyen de fixation de type vis venant en appui sur les haubans de cadre du cycle ou sur les fourreaux de fourche (30).

11. Dispositif d'adaptateur pour freins de cycles selon la revendication 8, caractérisé en ce que les moyens (13) bloquant chaque adaptateur (10) en rotation par rapport à la fourche (30) du cycle comprennent une soudure solidarisant l'adaptateur (10) avec la fourche (30) du cycle.

12. Dispositif d'adaptateur pour freins de cycles selon l'une des revendications 1 à 11, caractérisé en ce que le matériau utilisé pour fabriquer l'adaptateur (10) est de l'aluminium ou de l'acier ou du titane ou du carbone ou de l'acier inoxydable ou tout autre matériau.
